# EUROPEAN PATENT APPLICATION

(11) **EP 4 851 818 A2**
(43) Date of publication of application: **09.12.2026**
(21) Application number: 26214328.2
(22) Date of filing: 25.03.2026
(51) Int. Cl.: G06F 15/80

(54) **SYSTEMS AND METHODS FOR RECONFIGURABLE HARDWARE ACCELERATORS**

(30) Priority: 31.03.2025 US 202519095712
(62) Document number(s) of the earlier application(s) in accordance with Art. 76 EPC: 26167712.4 / 4 819 518
(71) Applicant: Avago Technologies International Sales Pte. Limited, Singapore 768923 (SG)
(72) Inventor: Xie, Hongyu, Irvine, 92618 (US)
(74) Representative: Dilg, Haeusler, Schindelmann Patentanwaltsgesellschaft mbH

(57) **Abstract**

A system, method and computer program product are provided for data processing at a physical, PHY, layer or a media access control, MAC, layer. The system comprises a plurality of circuits, a receiver, and one or more processors. Each circuit performs a PHY-layer or MAC-layer data-processing function. The receiver receives frames, and the processors select a set of the circuits as a datapath through which the frames are processed. The selected circuits are configured to include a tag in each frame. The tag identifies an instruction for each selected circuit to process the frame.

## Description

### Field of the Disclosure

This disclosure generally relates to systems and methods for improving communication systems for wireless communication protocols, such as Wi-Fi or Bluetooth.

### Background

Signal processing can process wireless signals transmitted and received between devices over a network. Signal processing tasks such as modulation, demodulation, encoding, and decoding are often performed using Hardware Accelerators (HWAs). HWAs are specialized hardware components designed to perform specific signal processing functions that would otherwise be computationally expensive to perform by a general computer processing unit (CPU). Signal processing for different media can be performed according to standard protocols that ensure compatibility and interoperability between different communication systems and devices. When updates to standards for processing a signal type are updated, configuration of HWAs may need to be updated to comply with the new standards. HWAs within a signal processing system can be managed by a central control unit, which can be challenging to reconfigure. Reconfiguring the central control unit to adapt to new requirements or to optimize for different signal processing tasks can be a time-consuming and intricate process. Furthermore, reconfiguring the signal processing system can involve modifying hardware connections.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a diagram depicting an example communication environment with communication systems, according to one or more embodiments.
FIG. 2 is a schematic block diagram of a computing system, according to an embodiment.
FIG. 3 is a diagram of a reconfigurable MAC system, according to one or more embodiments.
FIG. 4 is a diagram of an HWA template, according to one or more embodiments.
FIG. 5 is a diagram of signaling within the HWA template, according to one or more embodiments.
FIG. 6 is a diagram of a MAC TX/RX datapath, according to one or more embodiments.
FIG. 7 is a diagram of tags for data passed between HWAs, according to one or more embodiments.
FIG. 8 is a flow diagram showing a process for handling data utilizing reconfigurable HWAs, according to one or more embodiments.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

Various embodiments disclosed herein are related to an apparatus including a receiver and a plurality of circuits, and one or more processors. The plurality of circuits may each include a same set of input/output (I/O) interfaces and performing a respective function of processing data at the PHY layer or the MAC layer. The one or more processors may be configured to select a first set of circuits of the plurality of circuits to use as a first datapath to process, through each of the first set of circuits, data received by the receiver. Each of the first set of circuits may communicate with another one of the first set of circuits using the same set of I/O interfaces and may perform the respective function of processing the data.

In some implementations, each of the first set of circuits may process the data received by the receiver according to a first order of the first set of circuits indicated by the first datapath. The one or more processors may be configured to select a second set of circuits of the plurality of circuits to use as a second datapath to process, through each of the second set of circuits, second data received by the receiver. Each of the second set of circuits may process the second data received by the receiver according to a second order of the second set of circuits indicated by the second datapath.

In some implementations, the plurality of circuits may be connected to one another in a crossbar network or a daisy chain.

In some implementations, the same set of I/O interfaces may include a first input, a first output, a second input, and a second output. In some implementations, the one circuit of the first set of circuits may be configured to (1) receive, at the first input from a first circuit, a signal indicating whether the first circuit requests the one circuit to provide data, and (2) transmit, at the first output to a second circuit, a signal indicating whether the one circuit requests the second circuit to provide data. In some implementations, the one circuit of the first set of circuits may be configured to (1) receive, at the second input from the second circuit, a signal indicating whether the second circuit has data for the one circuit to process, and (2) transmit, at the second output to the first circuit, a signal indicating whether the one circuit has data for the first circuit to process.

In some implementations, each of the plurality of circuits may include a buffer storing data received from the another circuit. In some implementations, the one circuit may be configured to compare a size of data stored in the buffer with one or more thresholds and determine, using at least one of a result of the comparison or the signal received at the second input, the signal indicating whether the one circuit requests the second circuit to provide data.

In some implementations, the one circuit may be configured to compare a size of data stored in the buffer with 0 and determine, using a result of the comparison and the signal received at the second input. The signal may indicate whether the one circuit has data for the first circuit to process.

In some implementations, the one circuit may be configured to perform, using the signal received at the first input from the first circuit, a clock gating.

In some implementations, the first set of circuits may be configured to include a tag in each of the first plurality of frames, the tag identifying an instruction for each of the first set of circuits to process the corresponding frame according to the instruction.

In some implementations, the first set of circuits may include a first circuit at an entry point of the first datapath. In some implementations, the first circuit may be configured to receive a first frame of the first plurality of frames; generate, based on respective functions of the first set of circuits, a first tag; attach the first tag to the first frame; and transmit the first frame attached with the first tag to another circuit in the first datapath.

In some implementations, a second circuit of the first set of circuits may be configured to: receive a second frame of the first plurality of frames; determine a type of the second circuit; identify, using the type of the second circuit and a tag included in the second frame, a particular instruction; and process the second frame according to the particular instruction.

In some implementations, the type of the one circuit is at least one of a first type indicating a circuit at an entry point of the first datapath, a second type indicating a circuit performing one or more cyclic redundancy check (CRC) functions, a third type indicating a circuit performing encryption and/or decryption, or a fourth type indicating a circuit at an exit point of the first datapath.

Periodically, standards for transmitting signals can be updated. These standards can determine order of signal processing operations such as encryption and error detection when receiving or transmitting a signal. As a result, signal processing systems may be reconfigured as a part of these updates. However, signal processing systems with centralized control may include physical wired signals between HWAs. These wired signals may need to be rewired, which can be inefficient and hinder the reuse of existing hardware with new standards.

Embodiments in the present disclosure have at least the following advantages and benefits. Embodiments in the present disclosure can provide de-centralized and distributed control of HWAs within a datapath. As a result, the HWAs may be reconfigured through updated software (e.g., a wrapper including configuration bits and associated local finite-state machine (FSM) operating on the configuration bits). While centralized control configurations may include custom signals wired between HWAs, which may need to be re-wired to be adapted to a new standard, configurations of the HWA's within the de-centralized system can be adjusted using new wrappers.

Embodiments in the present disclosure can also minimize information duplication of instructions for processing data samples within the datapath. Metadata may be assigned to bytes of a data sample that indicates where sections of the data sample start and stop. Each HWA within the datapath can be configured to perform operations on certain sections of the data sample based on the metadata associated with the data sample. Metadata comprising a single set of tags can therefore be interpreted by each HWA to determine where the processes of the HWA start and stop within the data sample.

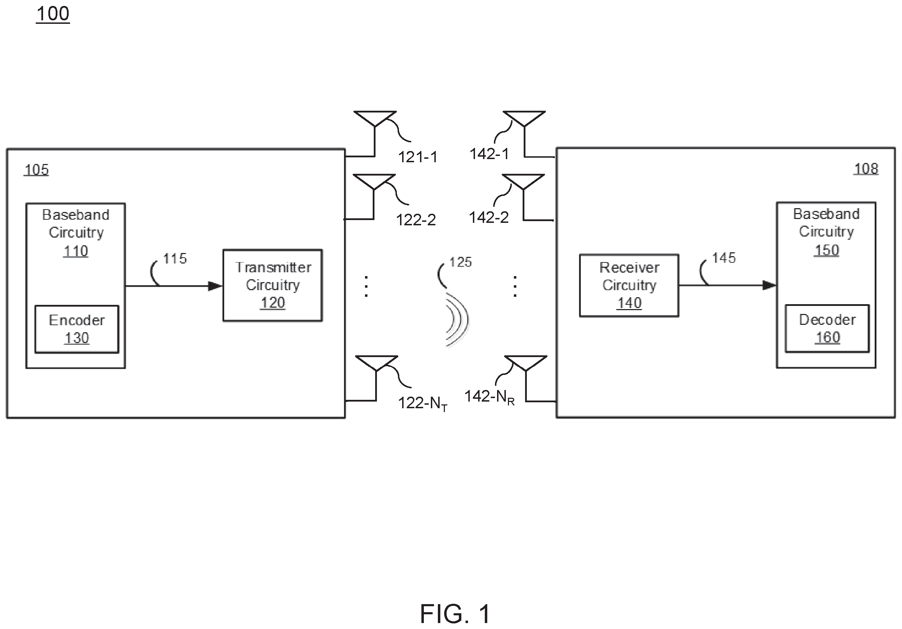

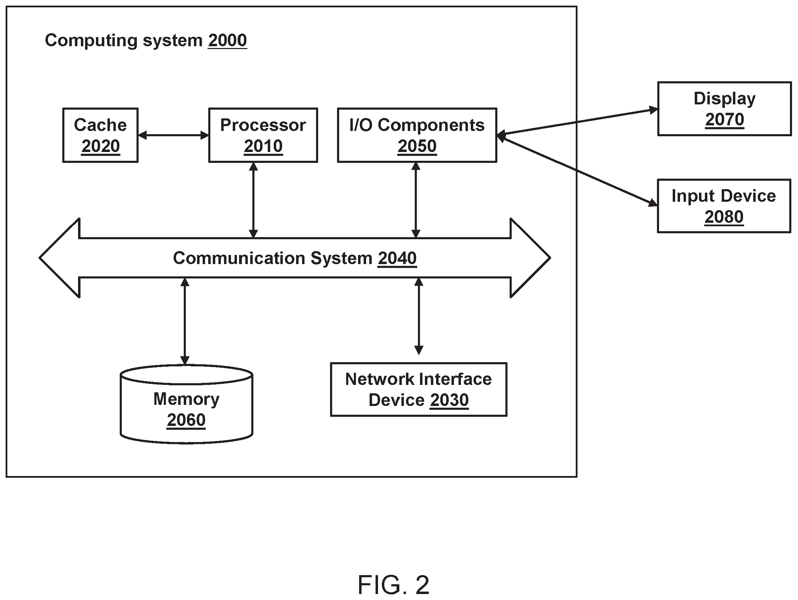

Referring to FIG. 1, illustrated is a diagram depicting an example communication environment 100 including communication systems (or communication apparatuses) 105, 108, according to one or more embodiments. In one embodiment, the communication system 105 includes a baseband circuitry 110 and a transmitter circuitry 120, and the communication system 108 includes a baseband circuitry 150 and a receiver circuitry 140. In one aspect, the communication system 105 is considered a transmitter communication system, and the communication system 108 is considered a receiver communication system. These components operate together to exchange data (e.g., messages or frames) through a wireless medium. These components are embodied as application specific integrated circuit (ASIC), field programmable gate array (FPGA), or any combination of these, in one or more embodiments. In some implementations, the communication systems 105, 108 include more, fewer, or different components than shown in FIG. 1. For example, each of the communication systems 105, 108 includes transceiver circuitry to allow bi-directional communication between the communication systems 105, 108 or with other communication systems. In some implementations, each of the communication systems 105, 108 may have configuration similar to that of a computing system 2000 as shown in FIG. 2.

The baseband circuitry 110 of the communication system 105 is a circuitry that generates the baseband data 115 for transmission. The baseband data 115 includes information data (e.g., signal(s)) at a baseband frequency for transmission. In one approach, the baseband circuitry 110 includes an encoder 130 that encodes the data and generates or outputs parity bits. In one aspect, the baseband circuitry 110 (or encoder 130) obtains a generator matrix or a parity check matrix or uses a previously produced generator matrix or a previously produced parity check matrix and encodes the information data by applying the information data to the generator matrix or the parity check matrix to obtain a codeword. In some implementations, the baseband circuitry 110 stores one or more generator matrices or one or more parity check matrices that conform to any IEEE 802.11 standard for WLAN communication. The baseband circuitry 110 retrieves the stored generator matrix or the stored parity check matrix in response to detecting information data to be transmitted, or in response to receiving an instruction to encode the information data. In one approach, the baseband circuitry 110 generates the parity bits according to a portion of the generator matrix or using the parity check matrix and appends the parity bits to the information bits to form a codeword. The baseband circuitry 110 generates the baseband data 115 including the codeword for the communication system 108 and provides the baseband data 115 to the transmitter circuitry 120.

The transmitter circuitry 120, referred to generally as transmitter(s), of the communication system 105 includes or corresponds to a circuitry that receives the baseband data 115 from the baseband circuitry 110 and transmits a wireless signal 125 according to the baseband data 115. In one configuration, the transmitter circuitry 120 is coupled between the baseband circuitry 110 and an antenna 122. In this configuration, the transmitter circuitry 120 up-converts the baseband data 115 from the baseband circuitry 110 onto a carrier signal to generate the wireless signal 125 at a radio frequency (RF) frequency (e.g., 10 MHz to 60 GHz), and transmits the wireless signal 125 through the antenna 122. In some implementations, the antenna 122 is a plurality of multiple-input and multiple-out (MIMO) antennas including transmission antennas 121-1, 122-2, ..., 122-N_{T} (e.g., the number of transmission antennas N_{T} is an integer greater than 1).

The receiver circuitry 140 of the communication system 108 is a circuitry that receives the wireless signal 125 from the communication system 105 and obtains baseband data 145 from the received wireless signal 125. In one configuration, the receiver circuitry 140 is coupled between the baseband circuitry 150 and an antenna 142. In this configuration, the receiver circuitry 140 receives the wireless signal 125 though the antenna 142, and down-converts the wireless signal 125 at an RF frequency according to a carrier signal to obtain the baseband data 145 from the wireless signal 125. The receiver circuitry 140 then provides the baseband data 145 to the baseband circuitry 150. In some implementations, the antenna 142 is a plurality of multiple-input and multiple-out (MIMO) antennas including receiving antennas 142-1, 142-2, ..., 142-N_{R} (e.g., the number of receiving antennas N_{T} N_{R} is an integer greater than 1).

The baseband circuitry 150 of the communication system 108 includes or corresponds to a circuitry that receives the baseband data 145 from the receiver circuitry 140 and obtains information data from the received baseband data 145. In one embodiment, the baseband circuitry 150 includes a decoder 160 that extracts information and parity bits from the baseband data 145. The decoder 160 decodes the baseband data 145 to obtain the information data generated by the baseband circuitry 110 of the communication system 105.

In some implementations, each of the baseband circuitry 110 (including the encoder 130), the transmitter circuitry 120, the receiver circuitry 140, and the baseband circuitry 150 (including the decoder 160) may be as one or more processors, application specific integrated circuit (ASIC), field programmable gate array (FPGA), or any combination of them.

FIG. 2 is a schematic block diagram of a computing system, according to an embodiment. An illustrated example computing system 2000 includes one or more processors 2010 in direct or indirect communication, via a communication system 2040 (e.g., bus), with memory 2060, at least one network interface controller 2030 with network interface port for connection to a network (not shown), and other components, e.g., input/output ("I/O") components 2050. Generally, the processor(s) 2010 will execute instructions (or computer programs) received from memory. The processor(s) 2010 illustrated incorporate, or are connected to, cache memory 2020. In some instances, instructions are read from memory 2060 into cache memory 2020 and executed by the processor(s) 2010 from cache memory 2020. The computing system 2000 may not necessarily contain all of these components shown in FIG. 2 and may contain other components that are not shown in FIG. 2.

In more detail, the processor(s) 2010 may be any logic circuitry that processes instructions, e.g., instructions fetched from the memory 2060 or cache 2020. In many implementations, the processor(s) 2010 are microprocessor units or special purpose processors. The computing device 2050 may be based on any processor, or set of processors, capable of operating as described herein. The processor(s) 2010 may be single core or multi-core processor(s). The processor(s) 2010 may be multiple distinct processors.

The memory 2060 may be any device suitable for storing computer readable data. The memory 2060 may be a device with fixed storage or a device for reading removable storage media. Examples include all forms of volatile memory (e.g., RAM), non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, or Blu-Ray^{®} discs). A computing system 2000 may have any number of memory devices 2060.

The cache memory 2020 is generally a form of computer memory placed in close proximity to the processor(s) 2010 for fast read times. In some implementations, the cache memory 2020 is part of, or on the same chip as, the processor(s) 2010. In some implementations, there are multiple levels of cache 2020, e.g., L2 and L3 cache layers.

The network interface controller 2030 manages data exchanges via the network interface (sometimes referred to as network interface ports). The network interface controller 2030 handles the physical and data link layers of the OSI model for network communication. In some implementations, some of the network interface controller's tasks are handled by one or more of the processor(s) 2010. In some implementations, the network interface controller 2030 is part of a processor 2010. In some implementations, the computing system 2000 has multiple network interfaces controlled by a single controller 2030. In some implementations, the computing system 2000 has multiple network interface controllers 2030. In some implementations, each network interface is a connection point for a physical network link (e.g., a cat-5 Ethernet link). In some implementations, the network interface controller 2030 supports wireless network connections and an interface port is a wireless (e.g., radio) receiver or transmitter (e.g., for any of the IEEE 802.11 protocols, near field communication "NFC", Bluetooth, ANT, or any other wireless protocol). In some implementations, the network interface controller 2030 implements one or more network protocols such as Ethernet. Generally, a computing device 2050 exchanges data with other computing devices via physical or wireless links through a network interface. The network interface may link directly to another device or to another device via an intermediary device, e.g., a network device such as a hub, a bridge, a switch, or a router, connecting the computing device 2000 to a data network such as the Internet.

The computing system 2000 may include, or provide interfaces for, one or more input or output ("I/O") devices. Input devices include, without limitation, keyboards, microphones, touch screens, foot pedals, sensors, MIDI devices, and pointing devices such as a mouse or trackball. Output devices include, without limitation, video displays, speakers, refreshable Braille terminal, lights, MIDI devices, and 2-D or 3-D printers.

Other components may include an I/O interface, external serial device ports, and any additional co-processors. For example, a computing system 2000 may include an interface (e.g., a universal serial bus (USB) interface) for connecting input devices, output devices, or additional memory devices (e.g., portable flash drive or external media drive). In some implementations, a computing device 2000 includes an additional device such as a co-processor, e.g., a math co-processor can assist the processor 2010 with high precision or complex calculations.

The components 2090 may be configured to connect with external media, a display 2070, an input device 2080 or any other components in the computing system 2000, or combinations thereof. The display 2070 may be a liquid crystal display (LCD), an organic light emitting diode (OLED) display, a flat panel display, a solid state display, a cathode ray tube (CRT) display, a projector, a printer or other now known or later developed display device for outputting determined information. The display 2070 may act as an interface for the user to see the functioning of the processor(s) 2010, or specifically as an interface with the software stored in the memory 2060.

The input device 2080 may be configured to allow a user to interact with any of the components of the computing system 2000. The input device 2080 may be a plurality pad, a keyboard, a cursor control device, such as a mouse, or a joystick. Also, the input device 2080 may be a remote control, touchscreen display (which may be a combination of the display 2070 and the input device 2080), or any other device operative to interact with the computing system 2000, such as any device operative to act as an interface between a user and the computing system 2000.

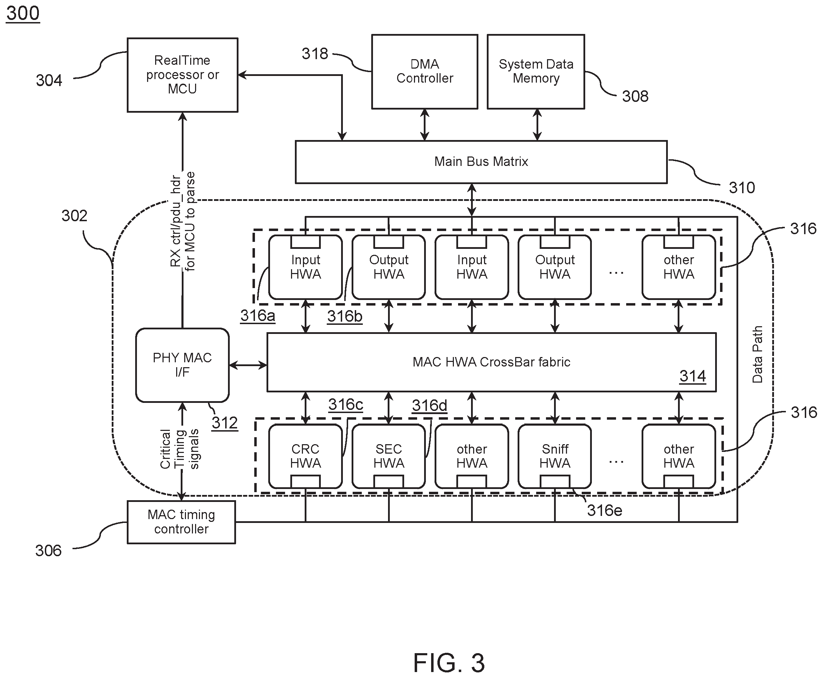

FIG. 3 is a diagram of a reconfigurable media access control (MAC) system 300, according to one or more embodiments. The reconfigurable MAC system may include a datapath subsystem 302, real time processor 304, MAC timing controller 306, DMA controller 318, system data memory 308, and/or main bus matrix 310. The datapath subsystem 302 can include a PHY interface 312, MAC crossbar 314, and/or HWA modules 316. In some examples, the reconfigurable MAC system 300 can support multiple MAC layer protocols for wireless communication systems through different software implementations. This may allow the reconfigurable MAC system 300 to adapt to various protocols without requiring any hardware modifications.

In some embodiments, the reconfigurable MAC system 300 may control how devices gain access to a medium (e.g., Wi-Fi channels, Bluetooth connections, and/or the like). For example, the reconfigurable MAC system 300 may give permission for devices within a network to transmit data. Within the network, each device may be associated with a unique MAC address. This can help identify the device when transmitting communications to and/or from the device. In some examples, the reconfigurable MAC system 300 can manage network traffic within the network. For example, the reconfigurable MAC system 300 can optimize data flow, prioritize certain data types, minimize collisions, and/or the like. Additionally, or alternatively, the reconfigurable MAC system 300 may be involved with various interactions with devices of the network, such as receiving requests of devices to associate with the network, authenticating devices, establishing a connection with devices, transmitting data to the devices, and/or receiving data from devices.

The real time processor 304 can select and execute commands. For example, the components of the real time processor 304 can be utilized to execute command scripts. In some examples, the real time processor 304 can regulate buffer memory water levels inside HWAs within the datapath subsystem 302 to execute command sequences in a memory-efficient manner. In some examples, the real time processor 304 can execute commands according to header information of incoming (e.g., received) or outgoing (e.g., transmitted) data. For example, the real time processor 304 can process packet control header and/or frame protocol data unit (PDU) headers carrying structure information of data packets and frames. These headers may indicate structural information that can be used to process data. The headers can vary depending on a protocol (e.g., Bluetooth, Wi-Fi, Zigbee, and/or the like). In an example, headers can be processed using firmware, which can be software that provides instructions for management of the reconfigurable MAC system 300's hardware. In some examples, headers can be used to configure datapaths. For example, the headers can configure an order of HWAs in a MAC transmission datapath. In this example, the headers can also include instructions for operations performed by specific HWAs (e.g., specific instructions for decryption). In reception datapaths, headers (e.g., a control header) may need to be parsed to retrieve packet and frame structure information before the reception datapath can be configured. For example, the real time processor 304 may parse received control headers using firmware to retrieve packet and frame structure information and then configure a MAC reception datapath based on the parsed information. In examples where the datapath is a reception datapath, the PHY interface 312 may route the received control header bits and/or PDU header bytes to the real time processor 304, where they may be parsed to determine the packet and frame structure information. The parsed packet and frame structure information can be used to configure each relevant HWA accordingly through writing into the configuration registers and command queue associated with a specific HWA via the main bus matrix 310. In some examples, the real time processor 304 can store command scripts that can be used to control the sequencing and/or execution of HWA modules 316. For example, the command strips can be stored into a command queue of an HWA so that the corresponding HWA control logic can pop commands one-by-one out of its command queue to know the execution sequence firmware instructs it to follow. Each HWA of the HWA modules 316 may include a dedicated command queue for firmware to program. This can allow for parallel execution of unique functions by the HWA modules 316 independently and in parallel. The command scripts can provide instructions (e.g., commands) for performing tasks in a synchronized and/or efficient manner. In some examples, the real time processor can include a sequencer that can select and/or execute command sequences to manage operation of the reconfigurable MAC system 300. The sequencer can be a processor (e.g., reduced instruction set computing (RISC) processor, advanced RISC (ARM) processor, and/or the like). In this example, the real time processor 304 can also include a compiler (e.g., modern compiler). For example, firmware code running on the real time processor 304 can be generated by a compiler. The compiler can apply various techniques, such as loop unrolling, to reduce overhead of stack operations and/or enhance performance of the reconfigurable MAC system. For example, the compiler can use directives (e.g., "#pragma unroll(n)" in C language) to avoid time-consuming stack operations (e.g., within a loop function).

In some examples, the main bus matrix 310 can manage the transfer of information between the datapath subsystem 302 and other components of the reconfigurable MAC system. For example, the main bus matrix 310 can manage the transfer of data between the system data memory 308 and the datapath subsystem 302. In an example, the main bus matrix 310 may manage transfer of data packets (e.g., data flow) based on adjusting buffering of data packets. Adjustments to buffering of data packets may be coordinated by DMA controller 318. In some examples, the main bus matrix 310 can. manage the transfer of received data into system data memory 308 after HWA modules 316 along the datapath subsystem 302 finish processing (e.g., performing operations such as CRC extraction and comparison, AES decryption, and/or the like) the data in sequence. In some examples, the main bus matrix 310 can manage the transfer of data from system data memory 308 into MAC transmission datapath for the HWA modules 316 to process in sequence before transmitting to the PHY layer via PHY interface 312. In an example, the main bus matrix 310 may manage the transfer of configuration settings and/or sequence of commands from real time processor 304 to their corresponding HWAs.

In some examples, the DMA controller 318 can manage the flow of data in the datapath subsystem 302 based on a control scheme. In some examples, the DMA controller 318 may facilitate direct memory access (DMA) for the HWA modules 316. For example, the DMA controller 318 may allow the HWA modules 316 to directly access the system data memory 308 (e.g., without a CPU of the system data memory 308). In this example, the DMA controller 318 can manage data movement through the main bus matrix 310.

The datapath subsystem 302 can include a plurality of hardware accelerator (HWA) modules configured to optimize performance of the reconfigurable MAC system 300. For example, the datapath subsystem 302 can be setup to receive data, process the data utilizing the various HWAs, and transmit it to the appropriate output channels. In some examples, the MAC crossbar 314 can manage communication and data transfer between the HWA modules 316 of the datapath subsystem 302. For example, the MAC crossbar 314 can include a switching network that defines data flow between the HWA modules 316. In various examples, the connections of the switch network may be non-blocking (e.g., multiple simultaneous permutations for different destinations can be forwarded without blocking each other), support bidirectional traffic, and/or be circuit-switching alike (e.g., single stage or multi-stage). In examples wherein the connections are multi-stage based, data may be routed through different stages via pseudo-static circuit-switching (e.g., as in old telephony private branch exchange (PBX) systems) or dynamic packet switching system. Alternatively, the HWA modules 316 can be connected using a daisy-chain topology based upon the most commonly used MAC datapath configurations instead of by the MAC crossbar 314. The MAC crossbar 314 may offer significantly more reconfigurability within the reconfigurable MAC system 300 in comparison to the daisy-chain topology, while the daisy-chain topology may be simpler to setup than the MAC crossbar 314.

In some examples, the PHY interface 312 can manage communication between the MAC layer and the PHY layer. For example, the PHY interface 312 can transmit and receive data from the PHY layer. As an example, the MAC layer may receive data from the PHY layer via the PHY interface 312 and process it using the HWA modules 316. The PHY layer may handle tasks associated with physical transmission and/or reception of data over the medium (e.g., modulation, demodulation, encoding, decoding, and/or the like). In some examples, the PHY layer and the MAC layer may interact (e.g., exchange data) to ensure proper synchronization of data transfer to devices within the network. This can ensure data is accurately transmitted and/or received.

The HWA modules 316 can perform various functions associated with the datapath subsystem 302. For example, the HWA modules 316 can be specialized hardware designed to handle repetitive tasks that would otherwise be computationally intensive if performed using software. Input HWA 316a may be a data entry point for the datapath subsystem 302 that assigns tags to data based on a data type of the data and/or a requirement of the destination HWA. In an example, the input HWA 316a can conduct word-to-byte conversion and/or data packing. In an example, the input HWA 316a may be configured by the real time processor 304. Output HWA 316b may be a data exit point for the datapath subsystem 302. In an example, the output HWA 316b can perform byte-to-word conversion and/or data packing. The input HWA 316a and/or the output HWA 316b can be the primary points of data entry and exit, respectively. In some examples, the datapath subsystem 302 can include multiple input and output HWAs. Cyclic redundancy check (CRC) HWA 316c can detect errors in data transmission and/or storage using CRC computations (e.g., generating and comparing checksums of data). Secure encryption and compression (SEC) HWA 316d can perform encryption and compression operations (e.g., encrypting data streams and compressing files for storage). Sniffer HWA 316e may monitor and capture data packets. As an example, the sniffer HWA 316e can intercept and log HTTP requests and responses to help diagnose web application issues.

The MAC timing controller 306 may control timing of operations within the reconfigurable MAC system 300. For example, the timers within the MAC timing controller can be used to schedule tasks, synchronize components, trigger events, and/or the like. For example, the MAC timing controller 306 may control the timing of operations based on timing instructions defined by a protocol associated with the data. In reception datapaths, these timing instructions may be parsed by the real time processor 304. An example of timing instructions may be Inter-Frame-Spacing (IFS). IFS instructions can define turnaround time from transmission to reception (e.g., TX-to-RX turnaround time) or reception to transmission (e.g., RX-to-TX turnaround time) in certain conditions. For example, and RX-to-TX turnaround time IFS instruction can define the expected time duration from the moment of radio energy associated with a last symbol of a received packet disappearing from an RX antenna port to a moment of radio energy associated with a subsequent transmitted packet first appearing on a TX antenna. In an example, IFS specifications can define precise time spacing (e.g., in µs) of data processing. In some examples, firmware of the real time processor 304 may interface with the MAC timing controller to maintain timing instructions associated with protocols (e.g., defined in control headers). In some examples, the MAC timing controller can include hardware timers. The hardware timers can be programmed by firmware and triggered by hardware events. For example, in a data reception datapath, the PHY layer may detect a synchronization trigger (e.g., based on signal correlation peak passing a defined threshold), which can be transmitted to the MAC timing controller 306 via the PHY interface 312, where it can be used as a trigger event.

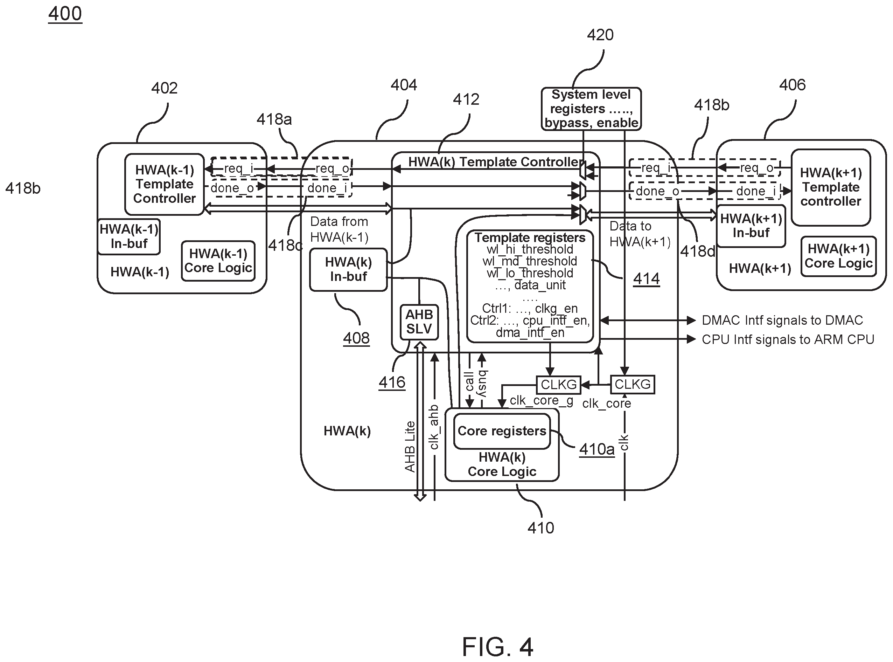

FIG. 4 is a diagram of an HWA template 400, according to one or more embodiments. HWAs (e.g., such as the HWA modules 316 of FIG. 3) that perform various tasks within a MAC system can be configured according to the HWA template 400. HWAs 402 and 406 can include components that are the same or similar to HWA 404. In an example, HWAs 402 and 406 can conduct different core functions than that of HWA 404. As depicted in FIG. 4, HWAs 402-406 are connected using daisy-chain topology. However, in other examples, they may be connected using a crossbar network (e.g., as depicted in FIG. 3). The HWA 404 can include a template controller 412, input buffer 408, core logic 410, template registers 414, and/or AHB slave 416. The core logic can include a set of core registers 410a. The HWAs 402 and 406 may also include these components. In some examples, the HWA template 400 may be implemented as part of a reconfigurable MAC system (e.g., such as the reconfigurable MAC system 300 of FIG. 3). The MAC system can include system level registers 420 for HWAs used in the MAC datapath (e.g., including HWA 404). In an example, the system level registers 420 can control whether an HWA is bypassed. Additionally, or alternatively, the system level registers 420 can control the main clock gating used to manage power consumption and performance of HWAs.

The core logic 410 can execute designated tasks. In an example, the core logic 410 can vary based on the task that the HWA 404 is designed to perform. For example, the core logic 410 can include instructions for various tasks, such as different encryption/decryption methods. The core logics for HWAs 402-406 can vary based on the task that the HWAs are designed to perform. As an example, core logic 410 included as part of a CRC HWA can differ from core logic 410 included as part of an AES HWA. In an example, the function logic core can be developed by an external entity and implemented into the HWA 404. In some examples, the core logic 410 can include core registers 410a. The core registers 410a can store configuration settings and operational parameters according to which the core logic 410 can execute designated tasks.

The template controller 412 can manage data flow into and out of the HWA 404. For example, the template controller 412 can be configured to interconnect the HWA 404 with other HWAs, such as HWA 402 and HWA 406. In some examples, standards of a medium associated with the reconfigurable MAC system may be updated. For example, Institute of Electrical and Electronics Engineers (IEEE) may update Wi-Fi standards to accommodate technology advancement, government regulations, changing security requirements, and/or the like. The template controller 412 of the HWA 404, and controllers of other HWAs, may be reconfigured to accommodate changes in standards. In an example, the interface that interconnects the HWAs can be a crossbar network (e.g., crossbar fabric) or a daisy-chain. The term crossbar network refers to a matrix of switches, Multiplexer (MUX), or any other circuitry or device that allows simultaneous data transfers between different pairs of inputs and outputs. The term daisy chain connection refers to any wiring scheme in which multiple devices are connected in sequence to form a linear chain.

Even though the core logic 410 inside HWA 404 can be completely different from other HWAs, such as a core logic of HWA 402 and a core logic of HWA 406, the template controller 412 inside each HWA may have identical (e.g., or near identical) logic and interface signaling so that they are interchangeable in connection. As an example, in a reconfigurable MAC system with crossbar topology (e.g., as shown in the FIG. 3) one MAC protocol, P1, may require CRC to be done ahead of some "other" function while another MAC protocol, P2, may require the CRC to be done after. In this example, when firmware detects the current packet transmission/reception following P1 protocol, it can configure the MAC datapath in a way that the data stream will be routed to CRC HWA first and then to the "other" HWA. Similarly, when the firmware detects the current packet transmission/reception following P2 protocol, it can configure the MAC datapath in a way that the data stream will be directed to the "other" HWA first and then CRC HWA. This configuration of the MAC datapath for the P1 protocol and P2 protocol may be performed without changes to hardware. Likewise, this process can be used to reconfigure the MAC datapath according to protocol update without modifications to the hardware, as long as all HWAs for functions of the new protocol have been instantiated and connected to the crossbar fabric. This level of reconfigurability can be made possible by encapsulating different core functions behind common HWA template controllers (e.g., such as template controller 412) with identical data exchange interface. By routing data over HWA crossbar fabric to participating HWAs in different order and by programming configuration registers and command queue inside each HWA accordingly, firmware can realize any MAC protocols or even support MAC protocol changes between packets using the same hardware. In examples where HWAs are connected in daisy-chained topology, certain level of reconfigurability can still be achievable by introducing bypass-mode and muxing-mode.

In some examples, HWAs may be connected in a linear topology. For example, the datapath follow a predetermined sequence through a set of HWAs. As a result, some HWAs may receive data from the preceding HWA in this sequence. For example, the HWA 404 may receive data from the HWA 402. HWA 404 can request data from HWA 402 by asserting signals 418, indicating its capacity to process additional data. Similarly, HWA 402 can signal to HWA 404 that it has no more data to transmit by deasserting these signals 418. Asserting a signal can refer to setting the signal to an active state (e.g., high voltage, logic = 1, and/or the like). Likewise, deasserting a signal can refer to setting the signal to an inactive state (e.g., low voltage, logic = 0, and/or the like).

In some examples, the data flow between HWAs can be managed based on signals. For example, the HWA template can be associated with signals 418. Signals 418a-b can be requests signals that propagate from HWA 406 (e.g., a downstream HWA of HWA 404) to HWA 404, then from HWA 404 to HWA 402 (e.g., an upstream HWA of HWA 404). As an example, signal 418b can indicate that HWA 406 is requesting more data (e.g., for its respective input buffer) from HWA 404 while signal 418a can indicate that HWA 404 is requesting more input for input buffer 408 from HWA 402. In some examples, the HWAs may have gated clocking. In these examples, gated clocking may be enabled (e.g., in part) in HWA 404 in response to HWA 406 requesting data for its input buffer. This may cause HWA 404 to start processing data in its input buffer 408. In these examples, gated clocking of HWA 404 may also depend on a data level of the input buffer 408. For example, the condition for enabling gated clocking may also include the input buffer 408 satisfying a threshold level of data. Signals 418c-d can be done signals that propagate from HWA 402 to HWA 404, and then from HWA 404 to HWA 406. For example, signal 418c can indicate that HWA 402 does not have any more data for HWA 404 to process (e.g., is done). As another example, signal 418d may indicate that HWA 404 does not have any more data for HWA 406 to process.

In some examples, the template controller 412 can include template registers 414. The template registers 414 can store configuration settings and operational parameters (e.g., thresholds, data unit, clock settings, and/or the like). In some examples, the template register 414 can include thresholds associated with receiving and transmitting data. For example, the template registers 414 can include high (e.g., "wl_hi_threshold"), medium (e.g., "wl_md_threshold"), and low (e.g., "wl_lo_threshold") thresholds. These thresholds can be associated with the level of data in the input buffer 408. In an example, the template controller 412 may set and clear signals 418 based on these thresholds. For example, based on determining that the data level in the input buffer 408 satisfies (e.g., is below) the low threshold (e.g., "wl_lo_threshold"), the template controller 412 can assert (e.g., set to 1) signal 418a (e.g., request output). As another example, the template controller 412 can deassert (e.g., set to 0) signal 418a when the data level in the input buffer satisfies (e.g., is above) the high threshold. In some examples, the template registers 414 can include a data unit register. The data unit register may define a size of a data unit. The size of the data unit may be a basic data size of a corresponding core logic to process as a unit. As an example, an HWA that performs 128-bit block AES may have a data unit of 16 bytes. As another example, an HWA that performs CRC may have a data unit of one byte. In some examples, the template controller 412 can assert a call signal as high to the core logic 410 when there is at least one data unit worth of data in the input buffer 408. The call signal may initiate the start of operations (e.g., performed according to the core logic 410) that process the data held in input buffer 408 of HWA 404. In an example where input buffer 408 is not empty and the signal 418c is set to 1, it may be determined that the input buffer 408 includes residue data (e.g., from HWA 402) that has not been processed.. As an example, an AES HWA may be associated with a data unit of 16-bytes. In this example, when the signal 418c is asserted, there may be 5 bytes left in input buffer 408. The core logic 410 may append 0s to the 5 bytes to form a 16-byte block based on determining that the signal 418c is asserted and there is less than a data unit left in the input buffer 408, which can allow the AES HWA to process the residual data. In some examples, the template registers 414 can include clocking functions to optimize timing and synchronization of data flow between HWAs. The clocking functions can be dynamic clocking functions that allow each HWA enable or disable clock to itself dynamically based on whether its core function needs to be working or not in order to minimize the power consumption. For example, the clocking functions can control clock gating (e.g., "clkg_en") which can enable or disable clock signals to HWAs depending on whether they are in use. In some examples, the template registers 414 can include registers that indicate interactions of the template controller 412 with other components of the reconfigurable MAC system. For example, the template registers 414 can include a DMAC interface. When the DMAC interface is enabled (e.g., set to 1), the core logic 410 may interact with a centralized DMA controller (DMAC) to DMA data from the system data memory 308 into the input buffer 408 of this HWA in scatter-gather fashion. Additionally, or alternatively, the core logic 410 may interact with the DMAC to DMA data from the input buffer 408 of this HWA to system data memory 308 in scatter-gather fashion. As another example, the template registers 414 can include a CPU interface. Similarly, when the CPU interface is enabled, the core logic 410 may interact with CPU to move data in or out of input buffer 408 of the HWA 404.

In some examples, the signals 418c-d can be set based on a signal of a previous HWA, ongoing processing, and data in the buffer. For example, signal 418d can be asserted when signal 418c is asserted (e.g., HWA 402 is done processing), there is no ongoing processing in core logic 410, and the input buffer 408 (e.g., the local input buffer) is empty.

The input buffer 408 can be a memory that may act as an elastic buffer to manage data processing speeds in the data flow. For example, the input buffer 408 can manage reception of data from the HWA 402 and transmission of data to the HWA 406. In an example, the input buffer 408 can be configured to minimize end-to-end latency. Additionally, or alternatively, the data level of input buffer 408 can be used by template controller 412 to dynamically gate off logic to save power. This may be done with little to no software intervention after initial configuration.

The system level registers 420 can include configuration settings for all HWAs in the MAC datapath, including the HWA 404. For example, the system level registers 420 can include configuration settings that determine whether to enable and/or bypass each HWA in the MAC datapath. When an enable corresponding to an HWA is asserted, the clock for that HWA can be turned on, allowing the HWA to operate. Conversely, when the enable bit corresponding to the HWA is set to 0, the clock for that HWA core can be turned off, effectively disabling the HWA. Similarly, the system level registers 420 can include a bypass bit for each HWA in the MAC datapath, including HWA 404. When the bypass bit is asserted, the corresponding HWA may be taken out of the data flow, and when it is deasserted, the corresponding HWA may be included in the data flow. This can facilitate reconfiguration of the reconfigurable MAC system. For example, the system level registers 420 may allow HWAs to easily and efficiently be implemented and/or removed for a new configuration within the reconfigurable MAC system.

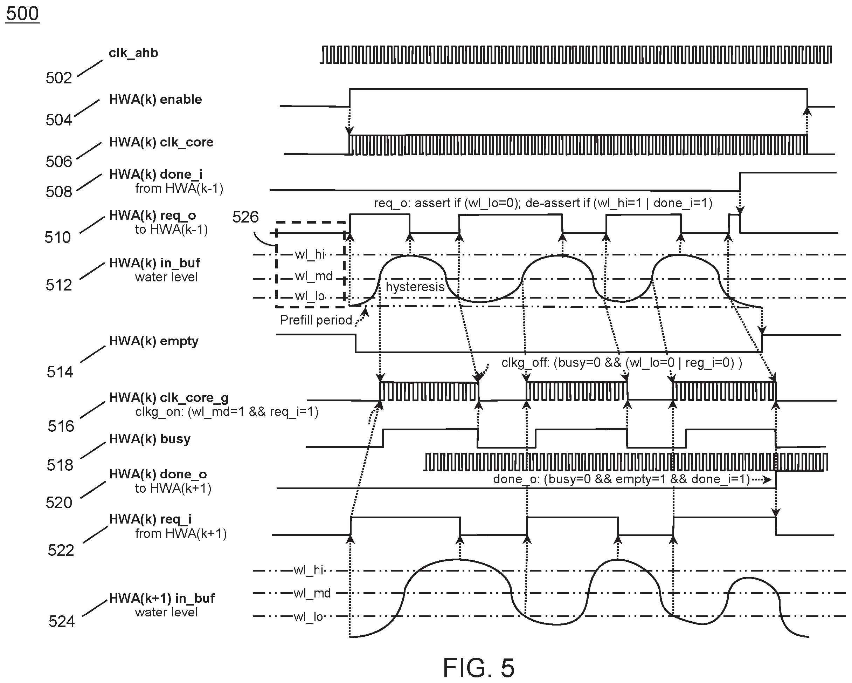

FIG. 5 is a diagram 500 of signaling within a reconfigurable MAC system utilizing an HWA template, according to one or more embodiments. Signals 502-524 can represent signals transferred between HWAs to manage data flow. As illustrated in the diagram, the signals can refer to HWA(k) (e.g., the HWA 404 of FIG. 4), upstream HWA(k-1) (e.g., the HWA 402 of FIG. 4), and downstream HWA(k+1) (e.g., HWA 406 of FIG. 4). In some examples, signals 502-524 may be high (e.g., enabled, logic = 1, asserted high, and/or the like) or low (e.g., disabled, logic = 0, deasserted low, and/or the like). These signals can include clocking signals such as AHB clock input 502, core clock input 506, and gated core clock input 516; request and done signals such as done input signal 508, done output signal 520, request input signal 522, request output signal 510; operations based signals of HWA(k) such as enable bit 504, busy signal 518, empty signal 514, HWA(and request output signal k) input buffer level 512; and operations based signals of HWA(k+1) such as HWA(k+1) input buffer level 524.

The operations-based signals of HWA(k) may indicate a state of processing within HWA(k). For example, the enable bit 504 may enhance the efficiency of the reconfigurable MAC system. The clocking function can consume a significant amount of power, therefore enabling the clocking function only when it is utilized for functions of the HWA can improve the efficiency of the reconfigurable MAC system. The HWA(k) may also be associated with a gated enable bit. This gated enable bit can provide an additional layer of control by dynamically asserting the gated core clock input 516 based on conditions. Asserting the gated core clock input 516 can include allowing a clocking signal to pass through. Dynamically asserting the gated core clock input 516 may minimize power consumption. As another example, the busy signal can indicate whether HWA(k) is currently processing data. For example, the busy signal 518 may be 0 or 1 based on whether there is processing currently being performed within HWA(k). Busy signal 518 may be set to 1 in response to processing of data starting within HWA(k) and set to 0 based on processing of data finishing within HWA(k). In an example, processing within HWA(k) can start in response to gated core clock input 516 being asserted. In this example, gated core clock input 516 can be deasserted based (e.g., in part) on the busy signal 518 indicating that processing within HWA(k) has finished. In some examples, HWA(k) can also be associated with an empty signal 514. The empty signal 514 can be set to 0 when there is data in the input buffer and 1 when the input buffer is empty.

The HWA(k) input buffer level 512 can indicate an amount of data held (e.g., water level) within an input buffer of HWA(k) (e.g., input buffer 408 of FIG. 4). The input buffer of HWA(k) can receive data from HWA(k-1). For example, HWA(k-1) can transmit data to HWA(k) after performing an operation (e.g., LDPC decoding). The input buffer can serve as temporary storage of the HWA(k), reducing time of the HWA(k) spent waiting to receive input data to process. In some examples, the HWA(k) input buffer level 512 can be compared against configured thresholds 526. The thresholds 526 can include a high, medium, and low threshold. In some examples, signals such as the request output signal 510 and done input signal 508 can be asserted high or deasserted low based on whether the HWA(k) input buffer level 512 satisfies one of the thresholds 526. For example, done input signal 508 can be asserted high to request more data when the amount of data (e.g. water level) held in input buffer is less than the firmware configured low threshold (wl_lo). In this example, the done input signal 508 can also be deasserted low to stop data request when the amount of data (e.g. water level) held in input buffer is higher than the firmware configured high threshold (wl_hi) or the done input signal 508 is asserted high, indicating that the upstream HWA(k-1) no longer has data to provide. In some examples, the done output signal 520 of HWA(k) can be asserted high when the in buffer of HWA(k) is empty and HWA(k) is no longer busy and done input signal 508 is high. HWA(k) can asserts done output signal 520 high to inform HWA(k+1) whether it is done with processing (e.g., whether HWA(k+1) can expect more data from HWA(k)). The addition of the medium threshold, as opposed to the thresholds 526 including just a high and low threshold, can provide system stability (e.g., hysteresis). For example, enabling the gated core clock input 516 based on a low threshold may result in bouncing between on and off. For example, when the input buffer level 512 is slightly above the low threshold, the core logic fetching data from the input buffer for processing can result in the input buffer level 512 falling below the low threshold, which can turn the gated core clock input 516 off. Enabling the gated core clock input 516 based on a medium threshold may prevent this, as initially fetching data for processing may not cause the input buffer level 512 to fall below the low threshold if the input buffer level 512 satisfies the medium threshold. The HWA(k+1) input buffer level 524 can function similarly to the HWA(k) input buffer level 512 based on the data levels of HWA(k+1).

The clocking signals can be signals associated with the clocking of the reconfigurable MAC system. For example, the HWA template can receive two clock inputs: AHB clock input 502 (e.g., "clk_ahb") and second clock input (e.g., "clk," not pictured). In an example, the AHB clock input and the second clock input may be different frequencies. In this example, the AHB clock input 502 and the second clock input may be phase aligned. In some examples, the clocking systems may be controlled by an enable bit 504 in a system-level control register (e.g. system level registers 420 of FIG. 4) for this HWA (e.g., HWA(k)) and a gated enable bit in the template registers (e.g., template registers 414 of FIG. 4). The gated enable bit can enable clock gating, which may be used to conserve power. When the enable bit 504 is 1, the core clock input 506 may be the same as the second clock input. When the enable bit is 0, the core clock input 506 may be 0. When the gated enable bit is 0, the gated core clock input 516 may be the same as the core clock input 506. When the gated enable bit is 1, the gated core clock input 516 may change dynamically based on the input buffer level 512 in relation to the thresholds 526. This pattern is depicted in the following table.

**Table 1: core clock inputs**

| Enable bit 504 | Core clock input 506 | Gated enable bit | Gated core clock input 516 |
|---|---|---|---|
| 0 | 0 | 0 | 0 |
| 1 | Second clock input | 1 | Dynamic |
| 1 | Second clock input | 0 | Second clock input |
| 0 | 0 | 1 | 0 |

The gated core clock input 516 may be enabled when the input buffer level 512 crosses the medium threshold (e.g., going from a lower data level to a higher data level) and request input signal 522 is high. Processing of data retrieved from the input may therefore start as a result of a threshold amount of data being present in the input buffer and the downstream HWA (e.g., HWA(k+1) indicating it has space for storing output data from HWA(k) in its input buffer (e.g., by asserting the request input signal 522). The gated core clock input 516 may be disabled when the input buffer level 512 crosses the low threshold (e.g., going from a higher data level to a lower data level) and either busy signal 518 is 0 (e.g. indicating current processing within its core logic is complete) or request input signal 522 is 0 (e.g. indicating there is no request from downstream HWA(k+1)).

Based on data processing activities, HWA(k) may receive and transmit request and done signals. For example, the HWA(k) may assert the request output signal 510 to high and transmit the request output to HWA(k-1) to request data for its input buffer. The request output signal 510 can be received by HWA(k-1) as a request input signal (e.g., signal 418a of FIG. 4). In an example, the request output signal 510 signal may be asserted high based on the input buffer level 512. For example, the request output signal 510 signal can be asserted high when the input buffer level 512 falls below the low threshold (e.g., from the thresholds 526) and deasserted low when the input buffer level 512 exceeds the high threshold and/or the done input signal 508 is asserted high. As a result, HWA(k-1) may start processing data from its input buffer when HWA(k) indicates (e.g., via the request output signal 510) that its input buffer has room to store the output. Similarly, HWA(k) may start processing data from its input buffer when HWA(k+1) indicates, via the request output signal 510 that is received by HWA(k) as request input signal 522, that its input buffer has room to store the output. In some examples, HWA(k) can assert the done output signal 520 which can be received by HWA(k+1) as a done input signal that indicates the HWA(k) is done processing all of its data (e.g., there is no more output for HWA(k+1). For example, HWA(k) can assert the done output signal 520 to high, which is transmitted to HWA(k+1), based on the busy signal 518 being set to 0, the empty signal 514 being set to 1, and a done input signal received from HWA(k-1) being set to 1. HWA(k) may indicate to HWA(k+1) that processing is complete when HWA(k-1) has finished processing its data, passed it to HWA(k), and HWA(k) has processed this data. In some examples, the done signal can be used for efficient clocking. For example, the done signal can be used by firmware to gate off the clock to HWAs that that have completed processing. As example, the enable bit 504 or the gated clocking enable bit can be set to 0 based on the done input signal 508 being set to 0. This can reduce power consumption.

In some examples, the reconfigurable MAC system can be associated with transmitting and/or receiving data to/from a PHY layer. For example, a MAC TX datapath (e.g., transmission) may process data and transmit the data from the MAC layer to the PHY layer. During transmission, when the PHY layer retrieves data, the MAC layer may guarantee that there is enough data by having a datapath with enough bandwidth to keep up with a worst-case scenario. The MAC layer may guarantee this through a setup where each downstream HWA (e.g., HWA(k+1)) has bandwidth that is lower than or equal to the upstream HWA (e.g., HWA(k)). The terms downstream and upstream can refer to the direction of data flow, and the HWA index k in HWA(k) can refer to a rank of an HWA with respect to the data source. The rank (e.g., order) of the HWAs may not change unless the reconfigurable MAC system is reconfigured. In some examples, downstream HWAs having lower bandwidth than upstream HWAs can cause request input signal 522 of HWA(k) to be set to low since HWA(k+1) may have lower bandwidth than HWA(k) and therefore may stop requesting more data from time to time. HWA(k) may gate off its clock to preserve power when the request input signal of its downstream HWA(k+1) is off.

Similarly, a MAC RX datapath (e.g., reception) may receive data from the PHY layer. During reception, the MAC layer may guarantee enough room without overflow. For example, the rest of the MAC datapath may have a wider bandwidth to keep up with a worst-case scenario. This guarantee may result in the downstream HWA(k+1) being consistently capable of requesting data from HWA(k) by keeping the request input of HWA(k) high. To prevent HWA(k) from staying on and wasting power, the medium threshold (e.g., instead of the low threshold) in the thresholds 526 can be included as part of the condition to turn on the clock to the core logic of HWA(k) (e.g., via the gated enable bit). For example, the core logic of HWA(k) may be turned on when the amount of data accumulated in the input buffer is greater than the medium threshold (e.g., even if the request input of HWA(k) is held constantly high). This can prevent HWA(k) from unnecessarily sitting idle (e.g., staying on and wasting power) when there is little data accumulated yet from the reception buffer HWA.

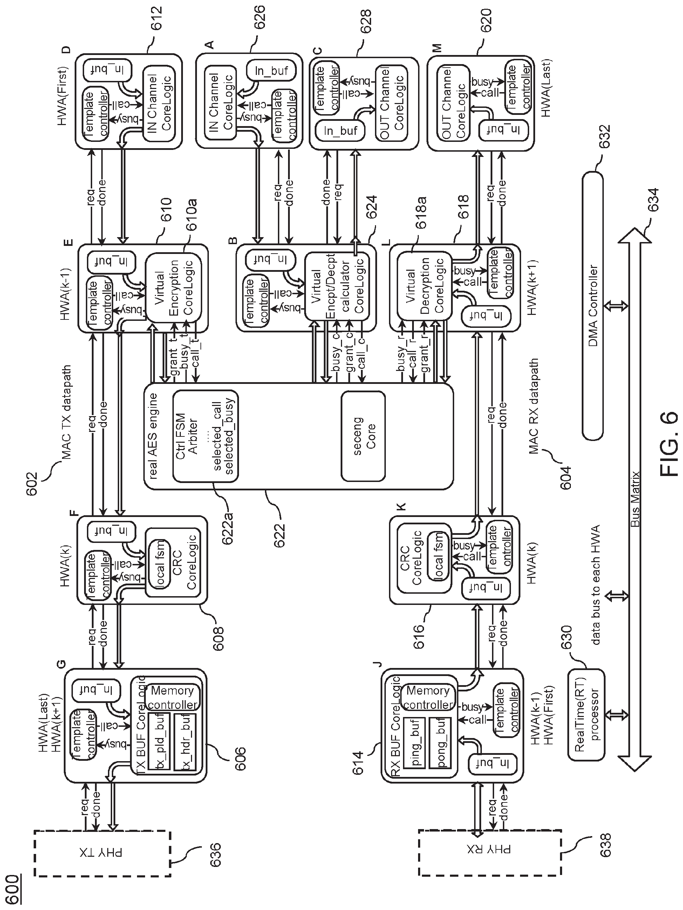

FIG. 6 is a diagram 600 of a MAC TX/RX datapath, according to one or more embodiments. In some examples, a reconfigurable MAC system (e.g., such as the reconfigurable MAC system 300 of FIG. 3) can transmit and/or receive signals from the PHY layer. For example, the reconfigurable MAC system can prepare frames and transmit them to the PHY TX datapath 636, which can convert them to a physical signal (e.g., electrical, optical, radio, and/or the like) or receive frames that the PHY RX datapath 638 has converted from a physical signal to digital data.

The reconfigurable MAC system may include a real time processor 630. The real time processor 630 may be separate from general computer processing unit (CPU) cores of a signal processing system that includes the reconfigurable MAC system. In an example, the real time processor 630 may be a custom real time sequencer or a bare-metal microcontroller unit. In some examples, the real time processor 630 may control operation of the datapath. For example, the real time processor 630 may program the set of configuration registers as well as the command queue with a sequence of commands for each HWA on the MAC datapath to instruct each HWA how to process the data it receives. Partitioning the real time processor 630 from the general CPU cores can allow the real time processor 630 to handle timing critical tasks that control the function of common HWAs. This may allow a datapath to be easily reconfigured by adjusting the control functions of the real time processor 630.

The MAC TX datapath 602 can include data management HWA 606, CRC HWA 608, encryption HWA 610, and input channel HWA 612. The input channel HWA 612 can receive data and assign tags to this data. For example, the input channel HWA 612 can interact with the DMAC 632 to transfer data from the system memory into the MAC. This may be done in a scatter-gather fashion, such that the data is collected from various non-contiguous memory locations and assembled into a single data stream for transmission. The input channel HWA 612 may attach tags to the data for use within the MAC TX datapath 602. In an example where the data width in the system memory is different than the data width of the MAC TX datapath 602, the input channel HWA 612 can perform data width conversion. The input channel HWA 612 may transmit data that it has processed (e.g., data samples and corresponding tags) to encryption HWA 610. The encryption HWA 610 can encrypt data for transmission. The data may be encrypted based on the tag attached by the input channel HWA 612. In an example, the data may also be encrypted based on the configuration registers and the command queue of the encryption HWA 610 that have been programmed by firmware. The encryption HWA 610 may transmit data that it has processed to CRC HWA 608. The CRC HWA 608 can calculate the checksum for each payload or payload slice. The CRC HWA 608 can also insert checksums that may be used by a device receiving the data for error detection. Similar to the encryption HWA 610, the CRC HWA 608 may process a data sample based on the associated tag. The CRC HWA 608 may also process the data sample based on the configuration of the registers and the command queue of the CRC HWA 608 that have been programmed by firmware. CRC HWA 608 may transmit data it has processed to data management HWA 606. The data management HWA 606 can manage data transmission to the PHY TX datapath 636. In an example, the data management HWA 606 may interact with PHY logic to move data from the MAC layer to the PHY layer. In this example, the data management HWA 606 may follow instructions from the associated tag and/or real time processor for each data samples.

The MAC RX datapath 604 can include data management HWA 614, CRC HWA 616, decryption HWA 618, and output channel HWA 620. The data management HWA 614 can interact with logic of the PHY layer to bring data from PHY into the MAC. For example, the data management HWA 614 may have a ping buffer that is filled with incoming data and a pong buffer that is being read and processed. In some examples, the data management HWA 614 may attach tags to data samples received from the PHY layer indicating specifications for data processing. The data management HWA 614 may then transmit data it has processed to the CRC HWA 616. The CRC HWA 616 may calculate the CRC for the received payload and/or payload slices and compare the calculated checksum against the received checksum to decide pass or fail This may be an opposite function from the function performed by the CRC HWA 608. The CRC HWA 608 may transmit data it has processed to the decryption HWA 618. The decryption HWA 618 may then decrypt received data. In an example, the data may be decrypted based on the associated tag. The decryption HWA 618 may then transmit data it has processed to the output channel HWA 620. The output channel HWA 620 may interact with the DMAC 632 to move data from the MAC RX datapath 604 to system memory. In an example, the output channel HWA 620 may transmit data under configurations from the real time processor 630 and associated tag in a scatter-gather fashion. Additionally, or alternatively, in an example where the data width of the system memory is different the data width of the MAC RX datapath 604, the output channel HWA 620 may perform data width conversion.

In some examples, The MAC TX datapath 602 and the MAC RX datapath 604 can share components of the reconfigurable MAC system. For example, the MAC TX datapath 602 and the MAC RX datapath 604 may both use AES engine 622 for encryption and decryption, respectively. Depicted in FIG. 6 is a reconfigurable MAC system that does not include a MAC crossbar fabric (e.g., such as the MAC crossbar 314 of FIG. 3). To allow both datapaths to access the AES engine 622 despite the lack of the MAC crossbar fabric, encryption HWA 610 can include virtual encryption core logic 610a and decryption HWA 618 can include virtual decryption core logic 618a. In an example, virtual encryption core logic 610a and virtual decryption core logic 618a can be physical logic (e.g., instead of virtual logic). AES engine 622 may receive requests (e.g., calls) from virtual encryption core logic 610a and virtual decryption core logic 618a. The arbiter controller 622a can determine if the AES engine 622 is busy. Based on this determination, the arbiter controller 622a can transmit a grant signal indicating that the call will be processed or a busy signal indicating that the AES engine 622 is busy and cannot process the data at that moment. In an example, the HWA can transmit data associated with the call in response to receiving the grant signal. In some examples, this same concept can be applied to HWAs within the same datapath. For example, using virtual core logic, two HWAs within a datapath can share a component, such as the AES engine 622. In this example, grant and busy signals may be used to signal to HWAs when the shared component is available.

In some examples, the HWAs can be connected to the bus matrix 634. For example, each HWA can include an AHB-lite bus attached to the bus matrix 634. Data may be moved between the bus matrix 634 and the HWAs through adjacent HWAs or the bus matrix 634. Data movement through the bus matrix 634 can be controlled by the DMAC 632 or a CPU of a signal processing system including the MAC datapaths. For example, it may be more efficient to move large quantities of data by the DMAC 632 and small quantities of data by the CPU. In some examples, the DMAC and/or CPU may implement a data throttling mechanism to prevent the input buffer from overflowing and/or underflowing. For example, the DMAC may implement the data throttle mechanism through DMAC interface signaling (e.g., using signals such as "DMACxBREQ") and the CPU may implement the data throttle mechanism through CPU interface signaling (e.g., using signals such as "more_data").

In some examples, encryption/decryption can be performed offline due to system requirements such as payload slicing. This can enhance security and reliability of the system. In these examples, offline input HWA 626 may interact with the DMAC 632 to retrieve data from system memory. For example, the offline input HWA 626 may perform operations that are the same or similar to the input channel HWA 612. The offline input HWA 626 may transmit this data to offline cryptography HWA 624. The offline cryptography HWA 624 can then perform operations that are the same or similar to the encryption HWA 610 or the decryption HWA 618. For example, the offline cryptography HWA 624 may submit calls including a request to encrypt or decrypt data and receive an indication that the call is granted (e.g., and the offline cryptography HWA 624 can transmit data associated with the call) or the AES engine 622 is busy. The offline cryptography HWA 624 can transmit the output data received from the AES engine 622 to the offline output HWA 628. Based on receiving the output data, the offline output HWA 628 can perform operations that are the same or similar to the output HWA 620.

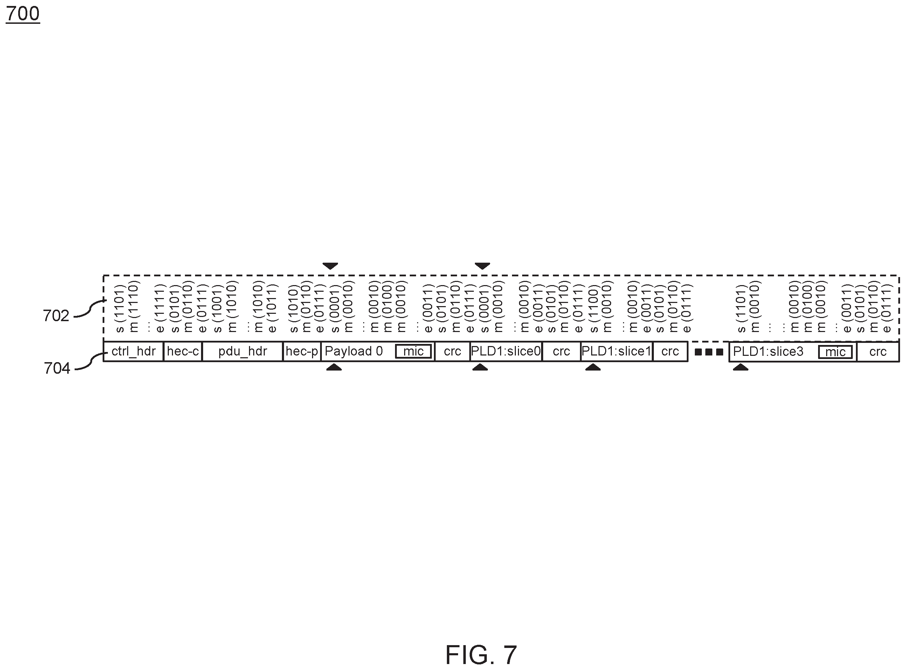

FIG. 7 is a diagram of a set of tags 700 for data passed between HWAs, according to one or more embodiments. A data flow processed by a reconfigurable MAC system (e.g., the reconfigurable MAC system 300 of FIG. 3) can include a plurality of data samples. Each data sample can be associated (e.g., by the reconfigurable MAC system) with a set of tag, such as the set of tags 700. For example, tags can be assigned to data samples at an entry point for the MAC data flow. In some examples, the tag can include one or more tag vectors 702 (e.g., 4-bit indicators) that indicate start and stop points for a section 704 of a data sample.

In some examples, bytes of a data sample can be associated with tag vectors 702 that indicate start, middle, and stop points for sections 704 of a data sample. These tags may section a data sample into various portions that can be interpreted by the HWAs. In an example where data samples are frames, the tags can indicate sections of the frames. For example, these tags can indicate the start of different sections of a data sample, such as control header data (e.g., "ctr_hdr") or PDU header data (e.g., "pdu_hdr"). The HWAs can be configured to perform certain operations on certain portions of data samples. Therefore, the tag vectors 702 can be used by HWAs as indicators of where to start and stop operations. Some of the tag vectors 702 may not be significant an HWA. For example, if the HWA has no operations to perform on the control header data, the tag vector indicating the control header data may not be significant to that HWA. However, if the HWA is configured to perform an operation on the control header data, the tag values indicating the start middle and end of the control header data can serve as indicators of where to start and stop the operation. In some examples, tags associated with bytes can be interpreted differently for an input channel HWA, CRC HWA, encryption/decryption HWA, and output channel HWA. This may allow multiple HWAs to determine which operations to perform based on the same set of tags.

In some examples, tags can be assigned at an entry point of a data path. For example, the entry point can be an HWA (e.g., input channel HWA 612 for the MAC TX datapath 602 or the data management HWA 614 for the MAC RX datapath 604 of FIG. 6) that attaches tags to data samples the data flow. The input channel HWA can determine the appropriate tag to attach based on interactions with the DMAC (e.g., for transmission), configuration instructions of a real time processor (e.g., such as the real time processor 630 of FIG. 6), and/or logic from the PHY layer (e.g., for reception).

The CRC tag interpretations can indicate how a CRC HWA (e.g., CRC HWA 608 of FIG. 6) may interpret tags associated with a data sample. In some examples, CRC computations can include different checksum lengths, different CRC polynomials, or only be performed on a part of a data sample. The CRC tag interpretations can indicate instructions for how to perform CRC computations. As an example, the following CRC tags may be used:

**Table 2: CRC Tag Table**

| Tag[3:0] | Info carried on data [7:0] | Tag[3:0] | Info carried on data [7:0] |
|---|---|---|---|
| 0000 | Invalid | 1000 | inserted mac_pld syndrome byte(s) |
| 0001 | mac_pld start-byte covered by CRC | 1001 | pdu_hdr start-byte covered by HEC-P |
| 0010 | mac_pld mid- byte(s) covered by CRC | 1010 | pdu_hdr mid- byte(s) covered by HEC-P |
| 0011 | mac_pld end-byte covered by CRC | 1011 | pdu_hdr end-byte covered by HEC-P |
| 0100 | mac_pld mid-byte (before the first MIC byte. CRC HWA treats this the same as tag=0010) | 1100 | mac_pld_slice start-byte (CRC HWA treats this the same as tag=0001) |
| 0101 | CHKSUM start-byte | 1101 | ctr_hdr start-byte covered by HEC-C |
| 0110 | CHKSUM mid-byte(s) | 1110 | ctr_hdr mid- byte(s) covered by HEC-C |
| 0111 | CHKSUM end-byte | 1111 | ctr_hdr end-byte covered by HEC-C |

The tags can be inserted at various parts (e.g., bytes) of the data sample to indicate the start and end of CRC operations. In some examples, the tags may be attached as indicators of starting and stopping bytes for operations associated with CRC operations. For example, the tag 1101 can indicate a start byte for HEC-C computations. The CRC HWA may load an HEC-C polynomial and start CRC computations based on the tag 1101. The CRC HWA may continue CRC computation on bytes with tag 1110 and then end the CRC computation on a byte with tag 1111. After ending the CRC computation, the CRC HWA can store the computed checksum. Similarly, the tag 1111 can indicate an end byte for HEC-C computations. The CRC HWA can store a computed checksum after completing the HEC-C computation on the end byte indicated by the tag 1111. The CRC HWA may then determine a 0101 tag, 0110 tag, and 0111 tag that indicate a start, middle, and end byte for the checksum that will be compared against the computed checksum. In an example, the CRC HWA can determine if the data sample passes or fails based on the comparison. Failing a CRC computation can indicate that there has been an error in data transmission and/or storage.

The encryption tag interpretations can similarly indicate bytes for the start middle and end of operations. The following encryption tags can be used:

**Table 3: Encryption Tag Table**

| Tag[3:0] | Info carried on data [7:0] | Tag[3:0] | Info carried on data [7:0] |
|---|---|---|---|
| 0000 | Invalid | 1000 | Pass through |
| 0001 | mac_pld start-byte | 1001 | Pass through |
| 0010 | mac_pld mid- byte(s) | 1010 | Pass through |
| 0011 | mac_pld end-byte | 1011 | Pass through |
| 0100 | mac_pld mid-byte (before the first MIC byte) | 1100 | mac_pld_slice start-byte (AES HWA treats this as tag=0010 the mid-bytes) |
| 0101 | Pass through | 1101 | Pass through |
| 0110 | Pass through | 1110 | Pass through |
| 0111 | Pass through | 1111 | Pass through |

In some examples, tag value interpretations for encryption or decryption can be similar to the corresponding CRC type tag interpretations shown in Table 2. In an example, not all tag values may be associated with an encryption/decryption operation. Tag values that are not associated with an encryption/decryption operation may be marked as pass through (e.g., allowing an encryption HWA to ignore irrelevant tags). This similar interpretation of tags for encryption/decryption and CRC operations can allow each HWA along a datapath to interpret tags differently. As a result, data can be processed without each HWA in a datapath parsing the similar MAC frame structure information individually for its own operation. This may avoid transmission of redundant data, which can increase efficiency of the system. In some examples, an HWA in the datapath can inject data including associated tags into the data flow and/or remove data and the associated tags. In some examples, firmware may instruct each HWA on how to process incoming data by programming a sequence of commands into specific HWA's command queue also. In these examples, the core logic of each HWA may pop the command sequentially from its command queue when started and execute the popped command one-by-one. This approach can involve more programming from firmware compared to the tagged approach but may offer more flexibility. For example, this approach can enable HWAs in MAC datapath to behave more independently. This may result in a hardware design that is analogous to object-oriented programming (OOP). For example, because HWAs can function more independently, they may be configured in a manner that is similar to objects in a software program. In practice, this dynamic command queue technique can be used in conjunction with tagged based approach or independently.

The output channel tag interpretations can be used by a MAC datapath exit point. For example, an output HWA for a reception datapath (e.g., the output HWA 620 of FIG. 6) can move data from the MAC datapath to system memory based, at least in part, on an attached tag.

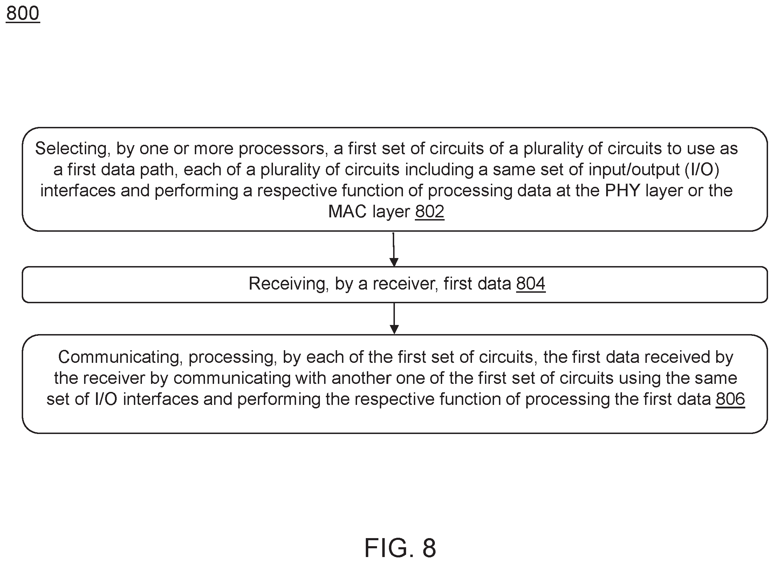

FIG. 8 is a flow diagram showing a process 800 for handling data utilizing reconfigurable HWAs, according to one or more embodiments. In some implementations, the process 800 is performed by one or more processors (e.g., communication system 105, system 108, or processors 2010). In other embodiments, the process 800 is performed by other entities. In some implementations, the process 800 includes more, fewer, or different steps than shown in FIG. 8.

In some embodiments the process 800 may be used to process data at a physical (PHY) layer and/or a media access control (MAC) layer. For example, a signal processing system including a receiver and/or transmitter can include a plurality of circuits, each circuit configured to perform a processing task. The term PHY layer refers to a layer of signal processing that demodulates (e.g., for received signals) or modulates (e.g., for transmitted signals) data into a signal that can be transmitted between devices, or any other layer of signal processing that processes physical signals. The term MAC refers to layer of signal processing that organizes data for transmission (e.g., performing tasks including addressing, frame delimiting, error detection, and/or the like) or interprets data received data that has been demodulated by the PHY layer (e.g., decrypting, forwarding to the appropriate higher layer, and/or the like), or any other layer of signal processing that manages media access control functions. The term receiver refers to components of devices such as Wi-Fi routers, smartphones, and Bluetooth headphones that receive signals, or any other circuitry or device that is configured to receive and process signals including data. The received signals can be demodulated (e.g., by the PHY layer) and processed (e.g., decrypted, checked for errors, and/or the like) at the MAC layer. In an example, the plurality of circuits can be associated with the PHY layer or the MAC layer. For example, each circuit in the plurality of circuits can perform functions (e.g., error detection, Fourier transform, and/or the like) associated with the MAC layer or the PHY layer.

At step 802, the one or more processors may select a first set of circuits from the plurality of circuits to use as a first datapath. The term circuit may refer to a component of a computing system that includes task specific circuitry, such as an HWA. For example, a circuit may be an HWA that is the same or similar to the HWA 404 of FIG. 4. Circuits, such as HWAs, may be designed to perform a respective function of processing data that would be computationally expensive and time-consuming for a general-purpose CPU. In some examples, the plurality of circuits can be associated with a same set of input output (I/O) interfaces. In some examples, the one or more processors may select the first set of circuits to be used as a first datapath. The first set of circuits may be selected in an order that determines the flow of data within the datapath. The term datapath refers to a MAC reception datapath, MAC transmission datapath, PHY reception datapath. or any other sequence of circuits that data is processed by within a layer of signal processing. In an example, the PHY layer and the MAC layer may be associated with a transmission and a reception datapath that represents an order that received or transmitted data may be processed in. In some examples, the data processed by the first datapath can include a plurality of frames. The term frame refers to an association request frame, data frame, protocol data unit, or any structured unit of data organized according to a standard for communication (e.g., Wi-Fi standard, Bluetooth standard, and/or the like). In this example frames can include sections such as a header, payload, and trailer.

In some embodiments, the first set of circuits can be configured to associate tags with the first plurality of frames. The tags can include instructions for processing the frames. For example, the tags can indicate where sections of the frame begin. The term tag refers to any data that identifies sections of a data sample being processed in the datapath, such as a four-bit data vector corresponding to a byte of a data sample. In an example, a tag may be assigned to each byte of a data sample to indicate whether the byte is the start of a section, the middle of a section, or the end of a section. In some examples, the first set of circuits can process the first plurality of frames based on the tags. For example, a circuit can be configured to process a section of the frame. As an example, the circuit may be configured to perform an error detection method on the payload of a frame. Based on the indications included in the tag, the circuit may identify the payload and perform the error detection method. In some examples, the tags may be generated using a circuit that is an entry point of the first data point. For example, a first circuit (e.g., data management HWA 614 of FIG. 6) may be an entry point of a reception datapath. The first circuit can receive a first frame from the plurality of frames, generate a first tag for the frame, and attach the first tag to the first frame. The first frame may be transmitted along the datapath with the first tag, where subsequent (e.g., downstream) circuits can process the first frame based on the first tag. For example, a second circuit that is downstream from the first circuit can receive a second frame.

In some examples, the second circuit can interpret the tag based on the type of the second circuit. The term type of circuit refers to CRC, Reed-Solomon, encryption, or any other signal processing task that the circuit is configured to perform. In an example, the plurality of circuits may be associated with a first type of circuit indicating a circuit is an entry point of the first data point (e.g., data management HWA 614 or input channel HWA 612 of FIG. 6), a second type of circuit indicating a circuit performs CRC functions (e.g., CRC HWA 608 of FIG. 6), a third type of circuit indicating a circuit performs encryption/decryption (e.g., decryption HWA 618 of FIG. 6), or a fourth type of circuit indicating a circuit is an exit point of the first datapath (e.g., output channel HWA 620 of FIG. 6). In an example, the tags may identify sections of frames. In this example, circuits can identify instructions for processing the frame based on their type. The term instruction refers to core logic of a circuit, firmware routines, registers, or any programming of the circuit to execute functions. For example, a circuit that performs CRC computations can identify different instructions than a circuit that performs encryption/decryption based on the same set of tags. Frames can be processed at circuits according to the instructions identified from associated tags.

In some embodiments, the plurality of circuits can be associated a set of I/O interfaces that can be used to transmit signals (e.g., using signals 418 of FIG. 4) from a one circuit (e.g., HWA(k)) to a second circuit (e.g., HWA(K-1)). In an example, the set of I/O interfaces may include a first input and a first output. The first input and the first output may include request signals that indicate when the one circuit (e.g., the input buffer of an HWA) has room for data. For example, the first output can be transmitted to the second circuit, where it can be received as the first input. This first input can indicate (e.g., based on being set to 1) that the one circuit has room for data (e.g., in the input buffer). This can indicate a request made by the one circuit to the second circuit for the second circuit to provide data. The second circuit may process data based on this information (e.g., because the data has somewhere to be deposited once it has been processed). Additionally, or alternatively, the set of I/O interfaces can include a second input and a second output. The second input and the second output can be done signals used to indicate when processing is finished. For example, the one circuit may signal to a first circuit (e.g., HWA(k+1)) that it has finished processing data. This signal can indicate whether the one circuit has data for the first circuit to process. The term I/O interface refers to receiver transmitter setups that can be used to indicate signals between circuits such as Advanced eXtensible Interface (AXI), Peripheral Component Interconnect Express (PCIe), Universal Asynchronous Receiver-Transmitter (UART), or any other connection between circuits of the plurality of circuits that can be used to transmit signals indicating a state of data processing.

In some embodiments, the plurality of circuits can be connected to one another in a crossbar network or a daisy chain. For example, the plurality of circuits can be connected to one another via a crossbar network such as the crossbar network such as the MAC crossbar 314 of FIG. 3. The crossbar network may be a type of interconnection network that uses a grid of switches to dynamically connect multiple processors and memory modules, allowing for high-speed, parallel data transfer and communication. As another example, the plurality of circuits can be connected to one another via a daisy chain connection. A daisy chain connection may be a wiring scheme in which multiple devices are connected in sequence or in a ring, with each device connected to the next, allowing data to flow through each device in the chain. In examples where the plurality of circuits are connected in a daisy chain, virtual core logic may be used to allow multiple circuits to access an engine (e.g., such as the AES engine 622 of FIG. 6).

At step 804, the receiver may receive first data. For example, the receiver may receive a signal comprising the first data. The term first data can refer to the signal received by the receiver or data determined from this signal (e.g., generated by the PHY layer). In an example, the PHY layer may determine data included in the signal by demodulating the signal. In this example, the MAC layer may perform various operations, such as error detection and decryption, to further process the first data. After the data has been processed, it may be stored in a system memory.

In another example, the system can include a transmitter. In this example, the one or more processors may be configured to select a first datapath to process data at the MAC layer and a second datapath to process data at the PHY layer. In an example, the PHY layer may generate a physical signal through the second datapath. In this example, the transmitter may transmit the physical signal to an external device.

At step 806, the one or more processors may process the first data by each of the first set of circuits. For example, the selected first set of circuits can be associated with an order (e.g., set by the one or more processors). The data can be processed by the first set of circuits based on this order, where data is processed by a first circuit and transmitted to a next circuit in the first set of circuits based on the order. In some examples, the data may be transmitted between circuits based on communications using the same set of I/O interfaces. As an example, an upstream circuit can process and then transmit data to the next circuit in the order based on receiving a first input indicating the next circuit has room (e.g., in its input buffer) for the processed data.

In some embodiments, data can be processed via a first datapath and a second datapath. For example, the first datapath can be associated with the PHY layer, and the second datapath can be associated with the MAC layer. In this example, the first set of circuits can process the data received by the receiver according to a first order of the first set of circuits indicated by the first datapath. As an example, the first datapath can be a PHY RX datapath (e.g., such as the PHY RX datapath 638 of FIG. 6). The one or more processors may then select a second set of circuits of the plurality of circuits for a second datapath. As an example, the second datapath may be a MAC RX datapath (e.g., such as the MAC RX datapath 604 of FIG. 6). Second data can be generated through each of the second set of circuits based on a second order associated with the second datapath. The second order can be determined by the one or more processors.

In some embodiments, the one circuit (e.g., HWA(k)) can determine whether to set the first output (e.g., request output signal 510 of FIG. 5) as 1 or 0 based on a size of data stored in the buffer and a second input (e.g., done input signal 508 o FIG. 5) signal received from the second circuit. For example, the one circuit can compare a size of data (e.g., input buffer level 512 of FIG. 5) stored in the buffer with a set of thresholds (e.g., thresholds 526 of FIG. 5). The term buffer can refer to a cache memory, block RAM, first-in-first-out buffer, or any device configured to store data while it is being transferred between circuits. When the second input is 0, the first output can be determined based on the size of data. For example, based on determining that the size of data is below the low threshold, the first output can be asserted high (e.g., set to 1). As another example, based on determining that the size of data satisfies a high threshold, the first output can be deasserted low (e.g., set to 0). This can allow the one circuit to indicate when it has room in the buffer for data. When the second input is 1, the first output can be set to 0 since there is no more data to be requested.

In some embodiments, the one circuit can determine whether to set the second output (e.g., done output signal 520 of FIG. 5) as 1 or 0 based on the size of data in the buffer and a second input (e.g., done input signal 508 of FIG. 5). This can allow the one circuit to indicate to the first circuit (e.g., downstream circuit) that it is done processing when there is no more data in the buffer and the second circuit (e.g., upstream circuit) has indicated that it is done processing via the second input. For example, the second output can be set to 1 when the second input is set to 1 and the size of the data stored in the buffer is 0 (e.g., the buffer is empty) and the core logic of the one circuit has finished processing the last batch of data (e.g., the one circuit is no longer busy). At the start of processing, the second output may be initialized at 0.

In some embodiments, the one circuit can be configured to perform clock gating based on the signal received from the first circuit at the first input. The term clock gating refers to clock enable logic, AND gate-based clock gating, or any mechanism for enabling and disabling a clock signal within a circuit. For example, the one circuit can be configured to enable a gated clocking function based on the first input received from the first circuit (e.g., downstream circuit). When the first input is set to 1 and the size of the data stored in the buffer is above the programmed middle threshold, the gated clocking function may be enabled. Enabling the gated clocking function can allow the one circuit to process data, which can then be transmitted to the first circuit. When the first input is set to 0 (e.g., no request) or the size of the data stored in the buffer is below the a low threshold while the core logic of the one circuit is not busy processing data, the gated clocking function may be disabled. As a result, the one circuit can process data based on the first input from the first circuit indicating that it is requesting data. In some examples, this may allow the circuits to use power efficiently, since the gated clocking is enabled when data is requested by a downstream circuit and disabled when data is not requested.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

The present disclosure further contains the following aspects:
Aspect 1. A method for processing data at a physical, PHY, layer or a media access control, MAC, layer, the method comprising:
   selecting, by one or more processors, a first set of circuits of a plurality of circuits to use as a first datapath, each of a plurality of circuits including a same set of input/output, I/O, interfaces and performing a respective function of processing data at the PHY layer or the MAC layer;
   receiving, by a receiver, first data; and
   processing, by each of the first set of circuits, the first data received by the receiver by communicating with another one of the first set of circuits using the same set of I/O interfaces and performing the respective function of processing the first data.
Aspect 2. The method of aspect 1, wherein each of the first set of circuits processes the data received by the receiver, according to a first order of the first set of circuits indicated by the first datapath,
   the method further comprises:
      selecting, by the one or more processors, a second set of circuits of the plurality of circuits to use as a second datapath to process, through each of the second set of circuits, second data received by the receiver, wherein
   each of the second set of circuits processes the second data received by the receiver, according to a second order of the second set of circuits indicated by the second datapath.
Aspect 3. The method of aspect 1 or 2, wherein the plurality of circuits are connected to one another in a crossbar network or a daisy chain.
Aspect 4. The method of any one of the aspects 1 to 3, wherein
   the same set of I/O interfaces comprise a first input, a first output, a second input, and a second output, the method further comprises:
   receiving, by one circuit of the first set of circuits at the first input from a first circuit, a signal indicating whether the first circuit requests the one circuit to provide data;
   transmitting, by the one circuit at the first output to a second circuit, a signal indicating whether the one circuit requests the second circuit to provide data;
   receiving, by the one circuit at the second input from the second circuit, a signal indicating whether the second circuit has data for the one circuit to process; and
   transmitting, by the one circuit at the second output to the first circuit, a signal indicating whether the one circuit has data for the first circuit to process.
Aspect 5. The method of aspect 4, wherein
   each of the plurality of circuits include a buffer storing data received from the another circuit,
   the method further comprises:
      comparing, by the one circuit, a size of data stored in the buffer with one or more thresholds; and
      determining, by the one circuit, using at least one of a result of the comparison or the signal received at the second input, the signal indicating whether the one circuit requests the second circuit to provide data.
Aspect 6. The method of aspect 4 or 5, wherein
   the one circuit includes a buffer storing data received from the second circuit,
   the method further comprises:
      comparing, by the one circuit, a size of data stored in the buffer with 0; and
      determining, by the one circuit, using a result of the comparison and the signal received at the second input, the signal indicating whether the one circuit has data for the first circuit to process.
Aspect 7. The method of any one of the aspects 4 to 6, further comprising:
   performing, by the one circuit, using the signal received at the first input from the first circuit, a clock gating.
Aspect 8. A system for processing data at a physical, PHY, layer or a media access control, MAC, layer, the system comprising:
   a receiver;
   a plurality of circuits, each including a same set of input/output, I/O, interfaces and performing a respective function of processing data at the PHY layer or the MAC layer; and
   one or more processors,
   wherein the system is configured for controlling and/or carrying out a method as set forth in any one of the preceding aspects.
Aspect 9. A system for processing data at a physical, PHY, layer or a media access control, MAC, layer, the system comprising:
   a plurality of circuits, each performing a respective function of processing data at the PHY layer or the MAC layer;
   a receiver configured to receive a first plurality of frames; and
   one or more processors configured to
      select a first set of circuits of the plurality of circuits to use as a first datapath to process, through each of the first set of circuits, the first plurality of frames, wherein
      the first set of circuits are configured to include a tag in each of the first plurality of frames, the tag identifying an instruction for each of the first set of circuits to process the corresponding frame according to the instruction.
Aspect 10. The system of aspect 9, wherein
   each of the first set of circuits processes the data received by the receiver, according to a first order of the first set of circuits indicated by the first datapath,
   the one or more processors are configured to select a second set of circuits of the plurality of circuits to use as a second datapath to process, through each of the second set of circuits, second data received by the receiver, and
   each of the second set of circuits processes the second data received by the receiver, according to a second order of the second set of circuits indicated by the second datapath.
Aspect 11. The system of aspect 9 or 10, wherein
   the plurality of circuits are connected to one another in a crossbar network or a daisy chain.
Aspect 12. The system of any one of the aspects 9 to 11, wherein
   the first set of circuits include a first circuit at an entry point of the first datapath, and
   the first circuit is configured to:
      receive a first frame of the first plurality of frames;
      generate, based on respective functions of the first set of circuits, a first tag;
      attach the first tag to the first frame; and
      transmit the first frame attached with the first tag to another circuit in the first datapath.
Aspect 13. The system of any one of the aspects 9 to 12, wherein
   a second circuit of the first set of circuits is configured to:
   receive a second frame of the first plurality of frames;
   determine a type of the second circuit;
   identify, using the type of the second circuit and a tag included in the second frame, a particular instruction; and
   process the second frame according to the particular instruction.
Aspect 14. The system of aspect 13, wherein
   the type of the one circuit is at least one of a first type indicating a circuit at an entry point of the first datapath, a second type indicating a circuit performing one or more cyclic redundancy check, CRC, functions, a third type indicating a circuit performing encryption and/or decryption, or a fourth type indicating a circuit at an exit point of the first datapath.

## Claims

1. A system for processing data at a physical, PHY, layer or a media access control, MAC, layer, the system comprising:
a plurality of circuits (316), each performing a respective function of processing data at the PHY layer or the MAC layer;
a receiver (140) configured to receive a first plurality of frames; and
one or more processors (304) configured to
select a first set of circuits of the plurality of circuits (316) to use as a first datapath to process, through each of the first set of circuits, the first plurality of frames, wherein
the first set of circuits are configured to include a tag in each of the first plurality of frames, the tag identifying an instruction for each of the first set of circuits to process the corresponding frame according to the instruction.

2. The system of claim 1, wherein
each of the first set of circuits processes the data received by the receiver (140), according to a first order of the first set of circuits indicated by the first datapath,
the one or more processors (304) are configured to select a second set of circuits of the plurality of circuits (316) to use as a second datapath to process, through each of the second set of circuits, second data received by the receiver (140), and
each of the second set of circuits processes the second data received by the receiver (140), according to a second order of the second set of circuits indicated by the second datapath.

3. The system of claim 1 or 2, wherein the plurality of circuits (316) are connected to one another in a crossbar network (314) or a daisy chain.

4. The system of any one of the claims 1 to 3, wherein the first set of circuits include a first circuit (316a) at an entry point of the first datapath, and the first circuit (316a) is configured to:
receive a first frame of the first plurality of frames;
generate, based on respective functions of the first set of circuits, a first tag;
attach the first tag to the first frame; and
transmit the first frame attached with the first tag to another circuit in the first datapath.

5. The system of any one of the claims 1 to 4, wherein a second circuit of the first set of circuits is configured to:
receive a second frame of the first plurality of frames;
determine a type of the second circuit;
identify, using the type of the second circuit and a tag included in the second frame, a particular instruction; and
process the second frame according to the particular instruction.

6. The system of claim 5, wherein the type of the second circuit is at least one of a first type indicating a circuit (316a) at an entry point of the first datapath, a second type indicating a circuit (316c) performing one or more cyclic redundancy check, CRC, functions, a third type indicating a circuit (316d) performing encryption and/or decryption, or a fourth type indicating a circuit (316b) at an exit point of the first datapath.

7. A method (800) for processing data at a physical, PHY, layer or a media access control, MAC, layer, the method comprising:
selecting (802), by one or more processors, a first set of circuits of a plurality of circuits, each of the plurality of circuits performing a respective function of processing data at the PHY layer or the MAC layer, to use as a first datapath to process, through each of the first set of circuits, a first plurality of frames;
receiving (804), by a receiver, the first plurality of frames;
including (806), by the first set of circuits, a tag in each of the first plurality of frames, the tag identifying an instruction for each of the first set of circuits; and
processing (806), by each of the first set of circuits, the corresponding frame according to the instruction identified by the tag.

8. The method (800) of claim 7, wherein processing (806) the first plurality of frames comprises processing, by each of the first set of circuits, the data received by the receiver according to a first order of the first set of circuits indicated by the first datapath, the method further comprising:
selecting (802), by the one or more processors, a second set of circuits of the plurality of circuits to use as a second datapath to process, through each of the second set of circuits, second data received by the receiver;
receiving (804), by the receiver, the second data; and
processing (806), by each of the second set of circuits, the second data received by the receiver according to a second order of the second set of circuits indicated by the second datapath.

9. The method (800) of claim 7 or 8, wherein the plurality of circuits used for processing (806) are connected to one another in a crossbar network or a daisy chain.

10. The method (800) of any one of claims 7 to 9, wherein the first set of circuits includes a first circuit at an entry point of the first datapath, and processing (806) comprises, by the first circuit:
receiving a first frame of the first plurality of frames;
generating, based on respective functions of the first set of circuits, a first tag;
attaching the first tag to the first frame; and
transmitting the first frame attached with the first tag to another circuit in the first datapath.

11. The method (800) of any one of claims 7 to 10, wherein processing (806) comprises, by a second circuit of the first set of circuits:
receiving a second frame of the first plurality of frames;
determining a type of the second circuit;
identifying, using the type of the second circuit and a tag included in the second frame, a particular instruction; and
processing the second frame according to the particular instruction.

12. The method (800) of claim 11, wherein determining (806) the type of the second circuit comprises identifying the type as at least one of a first type indicating a circuit at an entry point of the first datapath, a second type indicating a circuit performing one or more cyclic redundancy check, CRC, functions, a third type indicating a circuit performing encryption and/or decryption, or a fourth type indicating a circuit at an exit point of the first datapath.

13. A computer program product comprising instructions which, when the instructions are executed by one or more processors (304) of a system comprising a receiver (140) and a plurality of circuits (316), cause the system to carry out the method of any one of claims 7 to 12.
